Europäisches Patentamt

European Patent Office

Office européen des brevets

(19)

(11) EP 0 617 817 B1

(12) EUROPÄISCHE PATENTSCHRIFT

(45) Veröffentlichungstag und Bekanntmachung des Hinweises auf die Patenterteilung:
03.04.1996 Patentblatt 1996/14

(21) Anmeldenummer: 93901015.3

(22) Anmeldetag: 15.12.1992

(51) Int Cl.6: G06K 15/12

(86) Internationale Anmeldenummer:
PCT/EP92/02910

(87) Internationale Veröffentlichungsnummer:
WO 93/13499 (08.07.1993 Gazette 1993/16)

(54) **ELEKTROFOTOGRAFISCHES DRUCK- ODER KOPIERGERÄT MIT EINER EINRICHTUNG ZUR KOMPENSATION DER WELLENLÄNGENABHÄNGIGEN LICHTEMPFINDLICHKEIT DES LADUNGSBILDTRÄGERS**

ELECTROGRAPHIC PRINTER OR COPIER WITH A DEVICE TO COMPENSATE FOR THE WAVELENGTH-DEPENDENT LIGHT SENSITIVITY OF THE CHARGE IMAGE SUBSTRATE

APPAREIL ELECTROPHOTOGRAPHIQUE D'IMPRESSION OU DE COPIE AVEC UN DISPOSITIF PERMETTANT DE COMPENSER LA SENSIBILITE LUMINEUSE, EN FONCTION DE LA LONGUEUR D'ONDE, DU PORTEUR D'IMAGES ELECTRONIQUES

(84) Benannte Vertragsstaaten:
DE FR GB IT NL

(30) Priorität: 20.12.1991 EP 91121885

(43) Veröffentlichungstag der Anmeldung:
05.10.1994 Patentblatt 1994/40

(73) Patentinhaber: Siemens Nixdorf Informationssysteme Aktiengesellschaft
D-33102 Paderborn (DE)

(72) Erfinder:
• CREUTZMANN, Edmund
  D-8015 Markt Schwaben (DE)
• SCHOLZ, Christian
  D-8035 Stockdorf (DE)

(74) Vertreter: Fuchs, Franz-Josef, Dr.-Ing.
Postfach 22 13 17
D-80503 München (DE)

(56) Entgegenhaltungen:
EP-A- 0 307 994          EP-A- 0 424 174
WO-A-87/02162

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein elektrofotografisches Druck- oder Kopiergerät mit einem Ladungsträger mit einer wellenlängenabhängigen Lichtempfindlichkeit und einem Leuchtelemente aufweisenden Zeichengenerator zur informationsabhängig gesteuerten Erzeugung von Ladungsbildern auf dem Ladungsbildträger sowie ein Verfahren zur Erzeugung von Ladungsbildern auf dem Ladungsbildträger.

Nach dem Prinzip der Elektrofotografie arbeitende Druck- oder Kopiergeräte enthalten optische Zeichengeneratoren. Diese optischen Zeichengeneratoren haben die Aufgabe, die in Form von elektronischen Daten vorliegenden Druckinformationen in ein optisches Bild umzusetzen, mit dem dann eine fotoleitende Schicht, z.B. eine Fotoleitertrommel, belichtet wird. Danach wird das belichtende Bild in bekannter Weise entwickelt und z.B. auf Papier umgedruckt.

Von Vorteil sind optische Zeichengeneratoren, die zeilenartig aufgebaut sind, da diese ohne mechanische Bewegung arbeiten. Bei dieser Art der Zeichengenerierung muß für jeden Punkt, der innerhalb einer Zeile abgebildet werden soll, eine eigene separate Lichtquelle vorhanden sein. Die Anzahl der Lichtquellen ist dadurch sehr groß. Als Lichtquellen werden vorzugsweise Leuchtdioden eingesetzt. Diese haben die nachteilige Eigenschaft, daß die Lichtausbeute der einzelnen Leuchtdioden stark schwankt. Um hohen Qualitätsansprüchen gerecht zu werden, müssen die einzelnen Leuchtdioden in geeigneter Weise korrigiert, d.h. individuell angesteuert werden, so daß die abgegebene Lichtenergie pro Belichtungspunkt auch bei unterschiedlicher Lichtausbeute annähernd gleich ist. Die abgegebene Lichtenergie der LED's läßt sich in bekannter Weise durch Variation der Einschaltzeit oder durch Variation des Erregungstromes bzw. Spannung steuern. Ein elektrofotografischer Drucker mit einer derartigen Belichtungsenergie-Korrektureinrichtung für den optischen Zeichengenerator ist aus der EP-B1-0 275 254 bekannt.

Es hat sich nun herausgestellt, daß beim Betrieb von derartigen elektrofotografischen Druckern mit einer zugeordneten Belichtungsenergie-Korrektureinrichtung für den optischen Zeichengenerator zusammenhängende Bereiche von gleichmäßig eingefärbten Druckbildern (z.B. Grauraster) häufig störende streifenförmige Einfärbungsunterschiede aufweisen. Diese Einfärbungsunterschiede zeigen eine scharfe Begrenzung zwischen Hell und Dunkel.

Die Erfinder haben nun festgestellt, daß die wellenlängenabhängige Lichtempfindlichkeit des Ladungsbildträgers im Zusammenwirken mit einer wellenlängenabhängigen Streuung der ladungsbilderzeugenden Leuchtelemente die wesentliche Ursache für die Streifenbildung ist.

Optische Zeichengeneratoren bestehen im allgemeinen aus einer Vielzahl von nebeneinander angeordneten Chips mit darauf integriert angeordneten Leuchtdioden. Jeder Chip wird bei der Herstellung aus einem Wafer ausgeschnitten, wobei von Wafer zu Wafer eine Chargenstreuung auftritt. Diese Chargenstreuung führt zu unterschiedlichen Lichtwellenlängen des emittierten Lichtes der Leuchtelemente der verschiedenen Chips, das heißt, die Lichtwellenlänge des Lichtes der verschiedenen Leuchtelemente auf dem Zeichengenerator streut. Aus fertigungstechnischen Gründen ist es jedoch nicht möglich bei der Herstellung von Zeichengeneratoren die nebeneinander angeordneten Chips aus einem einzigen Wafer auszuschneiden und so z.B. für einen Zeichengenerator nur die Chips eines einzigen Wafers zu verwenden. Die Chips auf dem Zeichengenerator setzen sich also aus einer beliebigen Reihenfolge von aus unterschiedlichen Wafern ausgeschnittenen Chips zusammen. Damit tritt auf dem Zeichengenerator eine statistisch verteilte Streuung der Wellenlänge des Lichtes der verschiedenen LED's auf den verschiedenen Chips auf.

Zwar ist es theoretisch denkbar die Streifigkeit der Drucke dadurch zu vermeiden, daß die Toleranzen der Wellenlänge der LED-Chips extrem eingeschränkt wird. Eine vollkommene Beseitigung der Streifenbildung ist aber nur mit einer Nulltoleranz der Wellenlänge zu erreichen. Dies zu erreichen ist, wie geschildert, aus fertigungstechnischen Gründen nicht möglich. Eine weitere Möglichkeit bestünde in der Selektion von LED-Chips derselben Wellenlänge für den Einsatz und der Anordnung in einem Zeichengenerator. Auch ein solches Auswahlverfahren ist aus den geschilderten Gründen in einer Fertigung nur mit extrem hohem Aufwand zu realisieren.

Aus dem Dokument EP-A-0 424 174 ist ein elektrofotografisches Druck- oder Kopiergerät bekannt, mit einem lichtempfindlichen Ladungsbildträger mit einer wellenlängenabhängigen Lichtempfindlichkeit, einem Leuchtelemente aufweisenden Zeichengenerator zur informationsabhängig gesteuerten Erzeugung von Ladungsbildern auf dem Ladungsträger, wobei die Wellenlänge des Lichtes der verschiedenen Leuchtelemente auf dem Zeichengenerator untereinander streut, und einer Anordnung von Mitteln zur Kompensation der wellenlängenabhängigen Lichtempfindlichkeit des Ladungsbildträgers durch Steuerung der Belichtungsenergie der Leuchtelemente in Abhängigkeit von der Wellenlänge ihres emittierten Lichtes und der Lichtempfindlichkeit des Ladungsbildträgers bei der entsprechenden Wellenlänge, wobei die wirksame Belichtungsenergie der Leuchtelemente auf dem Ladungsbildträger nur bis zu 0,5% vom Sollwert abweicht. Damit können Einfärbungsunterschiede der entwickelten Ladungsbilder bei der Wiedergabe von Flächen mit gleichmäßiger Einfärbung verhindert werden.

Ziel der Erfindung ist es, ein anderes Verfahren zur zeichenabhängigen Erzeugung von Ladungsbildern auf einem Ladungsbildträger in einem Druck- oder Kopiergerät über einen Leuchtelemente aufweisenden Zeichengenerator bereitzustellen, bei dem eine wellenlängenabhängige Lichtempfindlichkeit des Ladungsbildträgers berücksichtigt wird.

Das Verfahren soll so ausgebildet sein, daß gleichmäßig eingefärbte Drucke ohne störende Einfärbungsunterschiede erzeugt werden können.

Dieses Ziel der Erfindung wird bei elektrofotografischen Druck- oder Kopiergeräten gemäß den Merkmalen des Patentanspruches 1 gelöst.

Vorteilhafte Ausführungsformen der Erfindung sind in dem Unteranspruch gekennzeichnet.

Bei der Untersuchung der ungewollten Streifigkeit beim elektrofotografischen Druckprozeß mit LED-Zeichengeneratoren konnte als Ursache die wellenlängenabhängige Empfindlichkeit des Ladungsbildträgers (Fotoleiters) ermittelt werden. Durch Verwendung eines Filters, das die wellenlängenabhängige Strahlungsempfindlichkeit des Ladungsbildträgers nachbildet, wird beim Abgleich des Zeichengenerators eine wellenlängenabhängige Belichtung eingestellt. LED's bzw. LED's-Chips, die eine Wellenlänge ihres emittierten Lichtes aufweisen, für die der Ladungsbildträger besonders unempfindlich ist, erhalten einen Korrekturwert, der die Belichtung um die entsprechende Relation erhöht. Das Filter kann bei Zeichengeneratoren, die eine integrierte Abgleichvorrichtung aufweisen, wie sie z.B. aus der EP-B1-0 275 254 bekannt ist, direkt vor dem als Sensor dienenden Fotoelement angeordnet werden, z.B. auch in Form einer aufgedampften Filterschicht. Damit ist es möglich, bei jedem erneuten Abgleich die notwendige wellenlängenabhängige Belichtung einzustellen. Einmal ermittelte Korrekturwerte können abgespeichert werden. Sie werden den LED-Chips bzw. den einzelnen LED's zugeordnet und bei jedem erneuten Abgleich abgerufen und mit den Abgleichwerten verknüpft. Beim Einsatz von Ladungsbildträgern mit unterschiedlicher Wellenlängenabhängigkeit kann durch entsprechende Änderung der Korrekturwerte dem wellenlängenabhängigen Verhalten der Ladungsbildträger Rechnung getragen werden.

Durch die erfindungsgemäßen Mittel zur Kompensation der wellenlängenabhängigen Lichtempfindlichkeit des Ladungsbildträgers durch Steuerung der Belichtungsenergie der Leuchtelemente in Abhängigkeit von der Wellenlänge ihres emittierten Lichtes ist es möglich, gleichmäßig eingefärbte streifenfreie Drucke zu erzeugen.

Ausführungsformen der Erfindung sind in den Zeichnungen dargestellt und werden im folgenden beispielsweise näher beschrieben. Es zeigen

Figur 1 eine schematische Darstellung in Form eines Blockschaltbildes einer Belichtungskorrektureinrichtung in einer elektrofotografischen Druckeinrichtung mit Mitteln zur Kompensation der wellenlängenabhängigen Lichtempfindlichkeit des Ladungsbildträgers,

Figur 2 eine Diagrammdarstellung der relativen spektralen Empfindlichkeit über die Wellenlänge λ des Ladungsbildträgers sowie des Fotosensors einer Belichtungskorrektureinrichtung in einer elektrofotografischen Druckeinrichtung.

Die Erfindung wird im folgenden anhand einer Belichtungskorrektureinrichtung beschrieben, bei der die Belichtungsenergie der Leuchtelemente über deren Einschaltzeit gesteuert wird. Sie ist jedoch auch in Belichtungskorrektureinrichtungen verwendbar, bei denen die Belichtungsenergie der Leuchtelemente durch Variation der Ansteuerspannung bzw. des Ansteuerstromes gesteuert wird.

In einem hier nicht im einzelnen dargestellten, nach dem elektrofotografischen Prinzip arbeitenden Drucker, der auch als Kopiergerät ausgebildet sein kann, ist ein optischer Zeichengenerator ZG angeordnet, der eine Vielzahl von einzeln erregbaren Leuchtdioden LED aufweist. Angesteuert von einer Ansteuereinrichtung werden durch Erregung der Einzelleuchtdioden LED des Zeichengenerators ZG auf einer mit der Geschwindigkeit v umlaufenden Fotoleitertrommel FL in bekannter Weise über eine selbstfokussierende Optik OP auf einer Fotoleiterschicht der Fotoleitertrommel FL Bildzeichen in Form von Ladungsbildern erzeugt, die dann in bekannter Weise in einer Entwicklerstation entwickelt und in einer Umdruckstation auf einen Aufzeichnungsträger (Endlospapier, Einzelblätter) übertragen werden. Der darzustellende Text wird dabei von einer externen Datenverarbeitungsanlage DVA der Druckersteuerung DS zugeführt.

Die sich aus einzelnen Punkten zusammensetzenden Bildzeichen werden durch Erregung der Leuchtelemente LED des Zeichengenerators ZG auf der Fotoleitertrommel FL zeilenweise erzeugt und zwar dadurch, daß das von den einzelnen Leuchtelementen ausgehende und durch die Optik OP fokussierte Strahlungsbündel von jedem Leuchtelement die vorgeladene Oberfläche der Fotoleitertrommel punktförmig entlädt und dadurch ein dem darzustellenden Zeichenbild entsprechendes Ladungsbild hervorruft.

Da die von den Leuchtelementen abgegebene Lichtleistung bzw. Belichtungsenergie nicht nur von den elektrischen Ansteuerwerten Strom und Spannung abhängt, sondern auch von dem Alterungszustand der Leuchtelemente und der Betriebstemperatur, ist eine Korrektureinrichtung vorgesehen, die die Lichtenergie der einzelnen Leuchtelemente abgleicht.

Die Korrektureinrichtung zum Abgleich der Belichtungsenergie enthält dabei ein Fotoelement FE, das in der Nähe der Oberfläche der Fotoleitertrommel hinter der Fokussierungsoptik OP angeordnet ist. Das Fotoelement FE ist mit einem Elektromotor M gekoppelt, der bei Aufruf einer Abgleichroutine, z.B. über die Druckersteuerung DS oder über die Datenverarbeitungsanlage DVA das Fotoelement FE zeilenweise über die Fokussierungsoptik OP bewegt. Gleichzeitig werden über die zentrale Druckersteuerung DS die einzelnen Leuchtdioden LED des Zeichengenerators ZG erregt. Die von den einzelnen Leuchtdioden ausgehende Strahlungsenergie unter Berücksichtigung der gesamten Übertragungsstrecke, einschließlich der Fokussierungsoptik OP, erzeugt am Ausgang des Fotoelementes FE ein entsprechendes elektrisches Signal, das einer mit dem Fotoelement FE gekoppelten programmgesteuerten Einrichtung PS zugeführt wird. Die programmgesteuerte Einrichtung enthält einen Verstärker V mit nachgeschaltetem Analog-/Digitalwandler AD zum Umsetzen des analogen, der Lichtenergie entsprechenden, Signals in ein digitales Signal. Ein Mikroprozessor PR enthält eine Zentraleinheit CPU mit zugeordneter Speichereinheit SP. Der Mikroprozessor PR erfaßt über die Zentraleinheit CPU die der Strahlungsleistung bzw. der Strahlungsenergie der Leuchtelemente LED entsprechenden Signale und speichert sie in der Reihenfolge ihrer Abtastung im Speicher SP ab. Aus der so gemessenen Strahlungsleistung der einzelnen Leuchtelemente LED kann nun durch Zuordnung einer den einzelnen LED angepaßten Betätigungszeit eine einheitliche für alle LED gleichmäßige Strahlungsenergie erzeugt werden. Zu diesem Zweck ordnet der Mikroprozessor PR den einzelnen im Speicher SP gespeicherten Einzelleistungen bzw. Lichtenergien der LED individuelle Betätigungszeiten zu und speichert diese Betätigungszeiten in den der Druckersteuerung DS zugeordneten, einzeln mit den LED verschalteten Schaltzeitspeichern SCH1 bis SCHn. Die Schaltzeitspeicher SCH1 bis SCHn können auch Teil eines gemeinsamen größeren Speichers sein.

Weiterhin weist die Korrektureinrichtung eine Kompensationsanordnung K auf, die über entsprechende Fühlelemente die Betriebsparameter der Druckeinrichtung, z.B. Geschwindigkeit v des Fotoleiters FL, Betriebstemperatur TF der Leuchtelemente LED erfaßt und abhängig davon die elektrischen Normbetriebsparameter, Spannung- und Stromstärke für sämtliche Leuchtelemente LED einheitlich festlegt und über Treiberstufen T1 bis Tn den LED zuführt. Zur Erfassung der Geschwindigkeit v der Fotoleitertrommel FL befindet sich an der Fotoleitertrommel FL eine Abtasteinrichtung A und zur Erfassung der Temperatur ein Temperaturfühlelement TF auf dem die LED aufnehmenden Träger des Zeichengenerators ZG. Sowohl der Abtaster A als auch das Temperaturfühlelement TF liefert an die Kompensationsanordnung eine den gemessenen Größen entsprechende Spannung, die an den Komperatoren Kl und K2 mit einer von außen zugeführten einstellbaren Normgleichspannung NG verglichen wird und abhängig von diesem Vergleichsvorgang dann den Ansteuerstrom bzw. die Ansteuerspannung für die Treiberstufen T1 bis Tn festlegt. Die Kompensationsanordnung K läßt sich auch gesondert einstellen, z.B. durch Variation der Normgleichspannung NG und unabhängig von deren Betriebsparametern. Das von dem Abtaster A gelieferte, der Drehgeschwindigkeit v proportionale Abtastsignal wird gleichzeitig auch einer Takteinrichtung CL zugeführt. In Verbindung mit einem von dieser Takteinrichtung CL gelieferten Taktsignal steuert die Druckersteuerung DS die Leuchtelemente LED des Zeichengenerators ZG Mikrozeile für Mikrozeile an.

Es hat sich nun herausgestellt, daß beim Betrieb von derartigen elektrofotografischen Druck- oder Kopiergeräten mit einer zugeordneten Belichtungsenergie-Korrektureinrichtung für den optischen Zeichengenerator zusammenhängende Bereiche von gleichmäßig eingefärbten Druckbildern (z.B. Grauraster) bei einfarbigem Druck häufig störende Einfärbungsunterschiede aufweisen. Diese streifenförmigen Einfärbungsunterschiede zeigen eine scharfe Begrenzung zwischen hell und dunkel.

Als Ursache für diese Einfärbungsunterschiede wurde die wellenlängenabhängige Lichtempfindlichkeit des Ladungsbildträgers im Zusammenwirken mit der Streuung der Wellenlänge des von den Leuchtelementen abgestrahlten Lichtes ermittelt.

Die Leuchtelemente LED des Zeichengenerators ZG sind in Gruppen von z.B. 128 Leuchtelementen auf Chips CHP1 bis CHPTN angeordnet. Jeder Chip wird bei der Herstellung aus einem Wafer ausgeschnitten, wobei von Wafer zu Wafer eine Chargenstreuung auftritt, so daß die Leuchtelemente der verschiedenen Chips eine unterschiedliche Wellenlänge des abgestrahlten Lichtes aufweisen. Übliche Galiumarsenidleuchtelemente LED mit einem Maximum der Strahlungsleistung bei etwa 680 nm Wellenlänge können z.B. eine Toleranz von ± 10 nm ihres Maximums aufweisen.

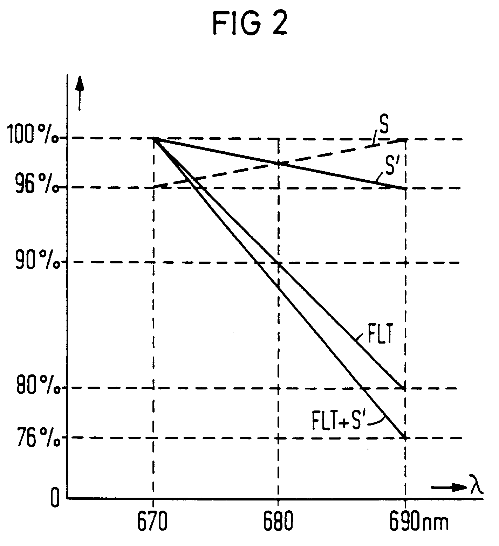

Hat die Fotoleitertrommel FL eine wellenlängenabhängige Lichtempfindlichkeit (spektrale Empfindlichkeit), wie sie durch die Kurve FLT der Figur 2 dargestellt ist, in einem Bereich z.B. zwischen 670 und 690 nm, so führt diese Empfindlichkeitsabsenkung bei längeren Wellenlängen des Fotoleiters in Verbindung mit der wellenlängenabhängigen Streuung des Lichtes der Leuchtelemente trotz Abgleich zu einer ungleichmäßigen Entladung des Fotoleiters. Daraus resultiert eine ungleichmäßige Einfärbungsdichte der Tonerbilder und damit der so erzeugten Drucke. Großflächeneinfärbungen weisen Streifen auf.

Zur Vermeidung dieser ungleichmäßigen Einfärbung gibt es im Prinzip die folgenden Lösungsmöglichkeiten:

a) Man verwendet Fotoleitertrommeln bzw. Ladungsbildträger mit wellenlängenunabhängiger Empfindlichkeit.

b) Es werden LED-Chips mit stark eingeschränkter Toleranz der Wellenlänge verwendet (z.B. mit einer Toleranzbreite der Wellenlänge ± 2 nm).

c) Durch Einsatz von Korrekturfilter wird die spektrale Empfindlichkeit des Ladungsbildträgers nachgebildet und damit kompensiert.

d) Es erfolgt eine wellenlängenabhängige Bewertung der Belichtung beim Abgleich der Zeichengeneratoren.

Wie bereits eingangs beschrieben, ist eine Lösung gemäß den Punkten a) und b) nur äußerst schwierig möglich.

Vorteilhaft und einfach in der Ausführung sind die Lösungen entsprechend den Punkten c) und d).

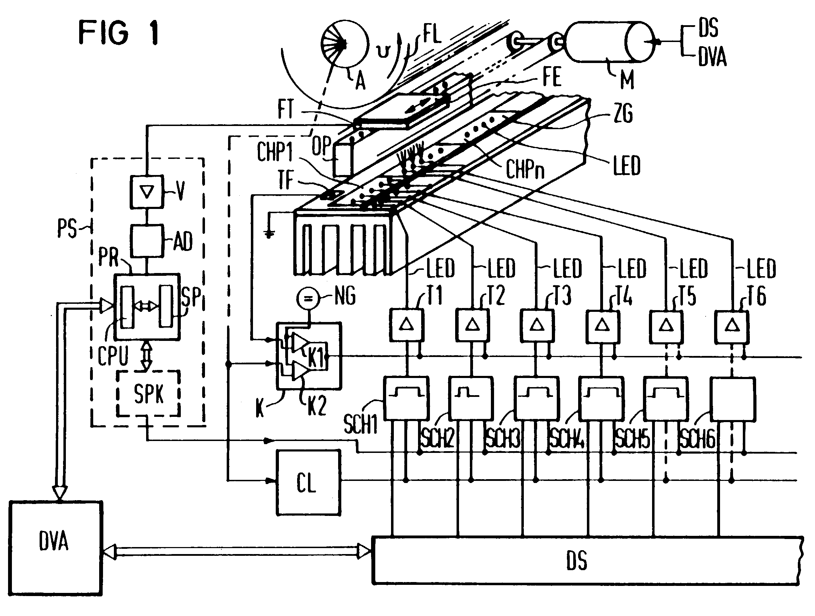

Mit einer Belichtungsenergie-Korrekturvorrichtung entsprechend der Figur 1 wird beim Abgleich des Zeichengenerators ZG die Lichtabstrahlung jedes einzelnen Leuchtelementes LED über das Fotoelement FE erfaßt. Die Einstellung der Belichtung aufgrund des Meßergebnisses erfolgt ohne Berücksichtigung der Wellenlänge. Der Abgleich erfolgt dabei derart, daß die auf dem Fotoelement auftreffenden Belichtungsenergien von jedem Leuchtelement gleich sind. Will man die wellenlängenabhängige Lichtempfindlichkeit des Ladungsbildträgers und die wellenlängenabhängige Lichtstreuung der Leuchtelemente beim Abgleich berücksichtigen, muß bei der Messung und Festlegung der von den LED's abgestrahlten Lichtenergie eine wellenlängenabhängige Bewertung vorgenommen werden. Hat der Ladungsbildträger einen spektralen Empfindlichkeitsverlauf entsprechend der Kurve FLT der Figur 2, muß das von den Leuchtelementen abgestrahlte Licht längerer Wellenlänge in seiner Abstrahlung gegenüber Licht kürzerer Wellenlänge verstärkt werden. Dies ist in einfacher Weise mit Hilfe einer Filtereinrichtung FT möglich.

Bei dem dargestellten Ausführungsbeispiel der Figur 1 hat der Ladungsbildträger einen spektralen Empfindlichkeitsverlauf entsprechend der Kurve FLT der Figur 2. Der ebenfalls zu berücksichtigende Fotosensor FE weist einen spektralen Empfindlichkeitsverlauf entsprechend der Kurve S auf. Bei einem als Fotosensor eingesetzten Fotoelement FE bedeutet dies, daß mit zunehmender Wellenlänge des empfangenen Lichtes der resultierende Strom am Fotoelement größer wird. Die entsprechende Bezugsgröße bei Ladungsbildträgern ist die erzielte Entladung auf der Oberfläche der Fotoleitertrommel. Da die Kurven für die spektrale Empfindlichkeit des Fotoleiters und des Fotosensors entgegengesetzt verlaufen, muß für die Ermittlung der Werte des Filters FLT der inverse Kurvenverlauf S' der spektralen Empfindlichkeit des Fotoelementes berücksichtigt werden.

Verwendet man beim Abgleich ein Filter FLT mit einem spektralen Empfindlichkeitsverlauf (Transmissionskurve) entsprechend der Kurve FLT + S', so wird wegen der Abgleichsfunktion der Belichtungskorrektureinrichtung bezogen auf das Fotoelement die von den LED's abgestrahlte Belichtungsenergie entsprechend dem Transmissionskurvenverlauf des Filters angehoben, wodurch die Unempfindlichkeit der Fotoleitertrommel bei längeren Wellenlängen ausgeglichen wird. Das Filter FT kann dabei aus einem im ganzen eingefärbten Glaselement bestehen, das unmittelbar vor dem Fotoelement angeordnet ist (Figur 1). Es ist jedoch auch möglich eine entsprechende Filterschicht auf das Fotoelement aufzudampfen. Durch das Filter wird im Prinzip die von den Leuchtelementen abgestrahlte Belichtungsenergie entsprechend dem Transmissionskurvenverlauf des Filters gedämpft. Da die Belichtungskorrektureinrichtung die abgestrahlte Belichtungsenergie der Leuchtelemente so abgleicht, daß auf dem Fotoelement FE die gleiche Belichtungsenergie auftrifft, wird die Belichtungsenergie entsprechend dem spektralen Empfindlichkeitsverlauf der Fotoleitertrommel angehoben und damit die wellenlängenabhängige Lichtempfindlichkeit des Ladungsbildträgers im Zusammenwirken mit der chargenabhängigen Wellenlängenstreuung der Leuchtelemente kompensiert. Das bedeutet, daß beim Ausführungsbeispiel der Figur 1 die im Speicher SP gespeicherte Strahlungsleistung bzw. Lichtenergie SP die Lichtenergie ist, die nach Dämpfung durch das Filter FT auf dem Fotoelement FE auftrifft. Diese so gedämpften Lichtenergien werden dann, wie beschrieben, über die Korrektureinrichtung K abgeglichen.

Werden innerhalb eines elektrofotografischen Druck- oder Kopiergerätes Ladungsbildträger mit unterschiedlicher spektraler Empfindlichkeit verwendet, so ist es im Prinzip notwendig, jedem Ladungsbildträger ein entsprechendes charakteristisches Filter zuzuordnen. Es ist jedoch auch möglich, durchgehend ein Normfilter FT zu verwenden und in einem zusätzlichen Speicher SPK, der ebenfalls der mikroprozessorgesteuerten Einrichtung PR zugeordnet sein kann, entsprechende relative Korrekturwerte abzulegen. Diese relativen Korrekturwerte bezeichnen den einzelnen Ladungsbildträgern zugeordnete spezifische Korrekturwerte, die deren spektrales Empfindlichkeitsverhalten in bezug auf den sogenannten Normladungsbildträger beschreiben. Es ist möglich, die einzelnen Ladungsbildträger, z.B. die Fotoleitertrommel, z.B. über Abtastmarken, zu kennzeichnen, so daß sie im eingebauten Zustand im Druck- oder Kopiergerät über eine entsprechende Abtasteinrichtung abgetastet werden kann, um dann in Abhängigkeit von der Abtastung die entsprechenden, vorher im Speicher SPK abgelegten, Korrekturwerte abzurufen.

Bei elektrofotografischen Druck- oder Kopiergeräten mit integrierter Belichtungsenergie-Korrektureinrichtung besteht das Problem, daß zwischen Optik OP und Fotoelement FE häufig nicht ausreichend Platz ist um dort ein Filter anzuordnen. Eine Möglichkeit des Ausgleiches unter Berücksichtigung der wellenlängenabhängigen Lichtempfindlichkeit des Fotoleiters besteht darin, den Zeichengenerator vor dem Einbau in das Gerät über eine Filtereinrichtung einer gesonderten Meß- und Abgleichanordnung (Endprüfgerät) abzugleichen, entsprechende Korrekturwerte im Speicher SPK zu speichern und dann bei dem betriebsmäßigen Abgleich im Gerät ohne Filter, diese Korrekturwerte im Speicher SPK zu berücksichtigen.

Zu diesem Zwecke wird die Lichtleistung jeder LED des einzubauenden Zeichengenerators zweimal erfaßt und zwar einmal ohne Filter und ein weiteres Mal mit Filter, wobei die Messung mit Filter in dem Endprüfgerät erfolgt. Bei der Meßwerterfassung werden automatisch jeweils die Mittelwerte der Meßwerte für jeden Chip CHP1 bis CHPn berechnet. Um die konstanten Anteile der Transmissionsverluste (Lichtverluste) durch das Filter auszugleichen, muß die Verstärkung des Verstärkers V der programmgesteuerten Einrichtung PS auf die Lichtenergie einer "Norm-Leuchtdiode", z.B. der Wellenlänge 680 nm kalibriert werden. Damit wird über die Verstärkung der Konstantwert der Transmissionsdämpfung des Filters ausgeglichen.

Für jeden Chip wird dann das Verhältnis Q der Mittelwerte der Meßwerte mit und ohne Filter berechnet: Q = Mittelwerte mit Filter/Mittelwerte ohne Filter.

Aus Gründen der Programmierung wird dann dem Quotienten Q eine ganze Zahl Z von 0 bis 255 zugeordnet (entsprechend 2 Byte):

$$Z = Q \times 1000 - Q \min \times 1000$$

Unter der Voraussetzung, daß die maximale Änderung der Lichtleistung in Abhängigkeit von der Wellenlänge etwa 20 % betragen soll, kann $Q \min = 0.744$ und $Q \max = 1.255$ gesetzt werden. Dadurch können auch größere Sprünge in der Lichtleistung bzw. Wellenlänge problemlos erfaßt werden. Dann entspricht der Wert $Z = 0$ dem kleinstmöglichen Verhältnis $Q \min$. $Z = 128$ entspricht dem Verhältnis 1 und $Z = 255$ entspricht dem größtmöglichen Verhältnis $Q \max$ der Mittelwerte der Meßwerte. Diese neuen Z-Werte werden für jeden Chip in dem Speicher SPK, der ein RAM-Speicher sein kann, unter einer entsprechenden Adresse abgelegt.

Bei der Belichtungsenergie-Korrektur bei eingebautem Zeichengenerator über das Fotoelement FE ohne Filter werden diese Z-Werte als Korrekturwerte verwendet und zur Festlegung der einzustellenden Belichtungsenergie von jedem LED aus dem Speicher SPK abgerufen und verarbeitet.

Durch das Filter wird ein linearer Zusammenhang zwischen Fotoleiterempfindlichkeit und Wellenlänge kompensiert. Um auch einen anderen, z.B. nichtlinearen Zusammenhang berücksichtigen zu können, ist es außerdem noch möglich, innerhalb der Speichereinrichtung SPK weitere Korrekturwerte, sogenannte F-Werte zu speichern. Sie werden nach der Formel $F(Z) = 128 \times F'(Z)$ gebildet. Dabei wird durch den Wert F' das Verhältnis der Empfindlichkeit einer Trommel mit nichtlinearer Abhängigkeit von der Wellenlänge zur Empfindlichkeit mit linearer Abhängigkeit ausgedrückt.

Damit wird bei einem folgenden Abgleich ohne Filter der Meßwert jeder LED mit Hilfe der oben definierten Z und F Werte korrigiert, wobei sich folgender Zusammenhang zwischen alten und neuen Meßwerten E ergibt.

$$E \text{ (neu)} = E \text{ (alt) } Q F'(Z)$$

Aus den korrigierten Meßwerten wird dann der im Korrekturspeicher abzulegende Korrekturwert berechnet und mit diesem dann die Wellenlängenabhängigkeit der Fotoleiterempfindlichkeit kompensiert.

## Patentansprüche

1. Verfahren zur zeichenabhängigen Erzeugung von Ladungsbildern auf einem eine wellenlängenabhängige Lichtempfindlichkeit aufweisenden Ladungsbildträger (FL) in einem Druck- oder Kopiergerät über einen Leuchtelemente aufweisenden Zeichengenerator (ZG), wobei die Wellenlänge des Lichtes der verschiedenen Leuchtelemente (LED) auf dem Zeichengenerator (ZG) untereinander streut mit folgenden Merkmalen:

    a) Erfassen der Lichtenergie der Leuchtelemente mit Hilfe eines Fotoelementes (FE),
    b) Erfassen der Lichtenergie der Leuchtelemente mit Hilfe desselben Fotoelementes, wobei zwischen dem Fotoelement (FE) und den Leuchtelementen (LED) ein Filter (FT) angeordnet wird, das die wellenlängenabhängige Empfindlichkeit des Ladungsbildträgers (FL) nachbildet,
    c) Ermitteln des Vehältnisses der unter Verwendung des Filters (FT) gemessenen Lichtenergie der Leuchtelemente zur ohne Filter gemessenen Lichtenergie und den Leuchtelementen zugeordnetes Abspeichern entsprechender Relativwerte (Z),
    d) bedarfsweiser Abgleich der Leuchtelemente (LED) des Zeichengenerators (ZG) bei vorgegebenen Normbetriebsparametern ohne Filter (FT), wobei jedem Leuchtelement eine spezifische Lichtenergie zugeordnet wird,
    e) Abspeichern von den einzelnen Leuchtelementen (LED) zugeordneten, die spezifischen Lichtenergien kennzeichnenden Korrekturwerten,
    f) zeichenabhängige Erregung der Leuchtelemente und Festlegung der abzugebenden Lichtenergie in Abhängigkeit von den gespeicherten über die Relativwerte (Z) korrigierten Korrekturwerten.

2. Verfahren nach Anpruch 1, wobei als Filter (FT) ein Normfilter und als Ladungsbildträger ein Normladungsbildträger verwendet wird und jedem Ladungsbildträger ein dessen spektrales Empfindlichkeitsverhalten in bezug auf den Normladungsbildträger beschreibender spezifischer Korrekturwert zugeordnet wird und, daß in Abhängigkeit von dem verwendeten Ladungsbildträger bei der zeichenabhängigen Erregung der Leuchtelemente die Korrekturwerte durch den spezifischen Korrekturwert entsprechend angepaßt werden.

## Claims

1. Method for the character-dependent generation of charge images on a charge image carrier (FL) which exhibits a wavelength-dependent light sensitivity, in a printer or copier, via a character generator (ZG) having illuminating elements, the wavelengths of the light from the various illuminating elements (LED) on the character generator (ZG) scattering amongst one another, the method having the following features:

a) registering the light energy from the illuminating elements with the aid of a photoelement (FE),

b) registering the light energy from the illuminating elements with the aid of the same photoelement, a filter (FT) which simulates the wavelength-dependent sensitivity of the charge image carrier (FL) being arranged between the photoelement (FE) and the illuminating elements (LED),

c) determining the ratio of the light energy from the illuminating elements, measured using the filter (FT), to the light energy measured without the filter, and storing corresponding relative valued (Z) assigned to the illuminating elements,

d) if required, comparing the illuminating elements (LED) of the character generator (ZG) under prescribed standard parameters without the filter (FT), a specific light energy being assigned to each illuminating element,

e) storing correction values which are assigned to the individual illuminating elements (LED) and characterize the specific light energies,

f) exciting the illuminating elements in a character-dependent manner and fixing the light energy to be emitted as a function of the stored correction values, corrected by the relative values (Z).

2. Method according to Claim 1, a standard filter being used as filter (FT) and a standard image carrier being used as charge image carrier, and each charge image carrier being assigned a specific correction value which describes its spectral sensitivity behaviour in relation to the standard image carrier and, as a function of the charge image carrier used, during the character-dependent excitation of the illuminating elements, the correction values being correspondingly adapted by means of the specific correction value.

**Claims**

1. Procédé pour produire, en fonction de signes, des images de charges sur un support (FL) d'image de charges, ayant une photosensibilité qui dépend de la longueur d'onde, dans un appareil d'impression ou de copiage, par l'intermédiaire d'un générateur (ZG) de signes, comportant des elements luminescents, selon lequel les longueurs d'onde de la lumière des différents é1éments (LED) luminescents sont dispersées sur le générateur (ZG) de signes suivant les caractéristiques suivantes :

a) la détection de l'énergie lumineuse des é1éments luminescents à l'aide d'un é1ément (FE) photosensible,

b) la détection de l'énergie lumineuse des éléments luminescents à l'aide du même élément photosensible, un filtre (FT) étant disposé entre l'élément (FE) photosensible et les éléments (LED) luminescents, qui reproduit la sensibilité, qui dépend de la longueur d'onde, du support (FL) d'images de charges,

c) la détermination du rapport de l'énergie lumineuse, mesurée en utilisant le filtre (FT), des éléments luminescents à l'énergie lumineuse mesurée sans filtre, et la mémorisation, associée aux éléments luminescents, de valeurs (Z) relatives correspondantes,

d) l'équilibrage, en cas de besoin, des éléments (LED) luminescents du générateur (ZG) de signes pour des paramètres donnés à l'avance de fonctionnement normal sans filtre (FT), une énergie lumineuse spécifique étant associée à chaque élément luminescent,

e) la mémorisation des valeurs de correction associées aux différents éléments (LED) luminescents et caractérisant les énergies lumineuses spécifiques,

f) l'excitation, en fonction des signes, des éléments luminescents et la détermination de l'énergie lumineuse devant être fournie, en fonction des valeurs de correction corrigées au moyen des valeurs (Z) relatives.

2. Procédé suivant la revendication 1, selon lequel on utilise comme filtre (FT) un filtre standard et comme support d'images de charges, un support d'images de charges standard et à chaque support d'images de charges est associée une valeur de correction spécifique, qui décrit le comportement de sensibilité spectrale de ce support par rapport au support d'images de charges standard, les valeurs de correction étant adaptées de façon adequate par la valeur de correction spécifique, en fonction du support d'images de charges utilisé, lors de l'excitation, en fonction du signe, des éléments luminescents.

# FIG 1

EP 0 617 817 B1

# FIG 2